# EUROPEAN PATENT APPLICATION

(11) **EP 1 280 154 A2**
(43) Date of publication of application: **29.01.2003**
(21) Application number: 02253039.8
(22) Date of filing: 30.04.2002
(51) Int. Cl.: G11B 25/10, G11B 31/00

(54) **Combined DVD player and VCR**

(30) Priority: 28.07.2001 KR 2001045762
(71) Applicant: SAMSUNG ELECTRONICS CO., LTD., Suwon-City, Kyungki-do (KR)
(72) Inventor: Han, Hong-Gyu, Suwon-city, Gyunggi-do (KR)
(74) Representative: Geary, Stuart Lloyd

(57) **Abstract**

A combination system having a DVDP (120) and a VCR (110) has a unit for inputting a selection command (111) for setting an operation mode, a unit for outputting the operation mode (210), a D/A converter (160) disposed in the DVDP, a blocking circuit (170) disposed in an output path of video data output from the DVDP, and a control unit (115) for controlling the above elements. The control unit (115) controls the output unit to output an indication of whether the video signal reproduced by the DVDP (120) is a wide screen signal when a DVD mode for operating the DVDP is selected. The control unit (115) stops the operation of the D/A converter (160) and activates the blocking circuit (170) when an operation mode other than the DVD mode is selected. When there is a need to release a view restriction function, the control unit (115) sends a control signal to a channel decoder (300) through a canal control signal output unit (310). Therefore, a control signal appropriate to the system is transmitted.

## Description

The present invention relates to a combination DVD player and VCR apparatus comprising a DVD deck, a digital-to-analogue converter for converting digital audio signals from the DVD deck into analogue audio signals, a VCR deck and control means for controlling the operation of the apparatus, e.g. in response to user commands input using a user input device.

Systems having more than two different apparatuses built therein are called 'combination systems' or a 'combo systems'. They are called 'combos' for short. An example of a combo system is a DVDP/VCR combo system which performs the function of a DVDP (digital video disk player or digital versatile disk player) and a VCR (video cassette recorder).

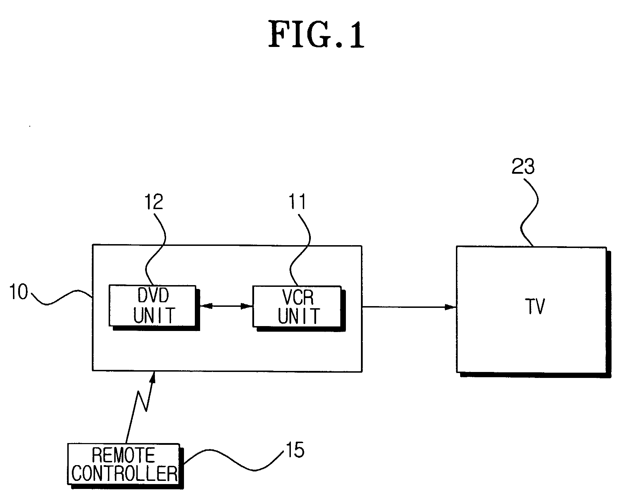

Figure 1 illustrates a DVDP/VCR combo system. The DVDP/VCR combo system 10 comprises a DVDP unit 12 for performing the usual functions of a DVDP such as reproducing video data and audio data recorded on an optical recording medium such as a DVD (digital video disk), and a VCR unit 11 for performing the usual functions of VCR such as reproducing video data and audio data recorded on a magnetic tape and recording a signal from outside on the magnetic tape. The DVDP/VCR combo system 10 can perform not only the individual function of the DVDP unit 12 and the VCR unit 11 but also the function of recording video and the audio signals reproduced by the DVDP unit 12 on magnetic tape in the VCR unit 11.

The DVDP unit 12 and the VCR unit 11 in the DVDP/VCR combo system 10 are built as one unit. Therefore, a user can switch between the DVDP unit 12 and the VCR unit 11 and the particular functions of each of the apparatuses 11, 12, by operating an input device, such as a remote controller 15 or a control panel (not shown) disposed at the front of the DVDP/VCR combo system 10. A TV 23 can be connected to the DVDP/VCR combo system 10 for outputting video and audio signals reproduced by the DVDP unit 12 and the VCR unit 11. Case: 40\800

In European PAL TVs, a SCART sockets are provided for communication with VCRs and other apparatus. The operating mode of the TV changes in response to signals identifying the nature of the video signal being received which are received via the SCART socket also. Therefore, in a European style VCR, a SCART socket should be arranged to transmit information about the state of the VCR to the TV. The information can be the type of video signal currently being output or a current operational mode of the VCR.

Furthermore, in Europe where a user pays for a certain broadcasting signal, a method for transmitting the charged broadcasting signal in scrambled form is used and a channel decoder is used to descramble the received signal. The user buys the channel decoder to watch the charged programme. After that, the user connects the channel decoder to the TV or the VCR. The received signals are transmitted to the TV after passing through the channel decoder. Thus, the user can watch the descrambled broadcast signal.

In European-style VCRs, there are often two SCART sockets. One is connected to a TV in order to transmit the current operation state to the TV, and the other is connected to the channel decoder in order to transmit broadcast signals to the channel decoder and to transmit a control command for controlling the operation of the channel decoder.

In European-style VCR, the controlling method is simple since the SCART socket output is controlled in dependence on whether the VCR is being operated or whether broadcast signal is to be watched. However, the aforementioned combination system 10 has not only a VCR 11 but also a DVDP 12. Thus various operational modes exist and various video signals and audio signals are output according to the operational modes. Accordingly, there is a problem in that the combination system cannot be controlled simply by adapting the method used in a conventional VCR. For example, while the VCR in the combination system is being operated, noise caused by the video and audio outputs of the DVDP is introduced into the video and audio signals reproduced by the VCR.

An apparatus according to the present invention is characterised by a blocking circuit for selectively blocking the output of digital video signals from the DVD deck and the control means being operable to control the blocking circuit to block the video output of the DVD deck and to disable the digital-to-analogue converter during output of video from the VCR deck.

Means may be included for receiving and outputting broadcast television signals, in which case the control means is operable to control the blocking circuit to block the video output of the DVD deck and to disable the digital-to-analogue converter during output of broadcast television signals. Preferably, means is included for providing received broadcast television signals to a descrambling means and accepting descrambled broadcast television signals from the same descrambling means for subsequent output. "Descrambling" is used here to refer to descrambling of analogue signals and decrypting of encrypted digital signals.

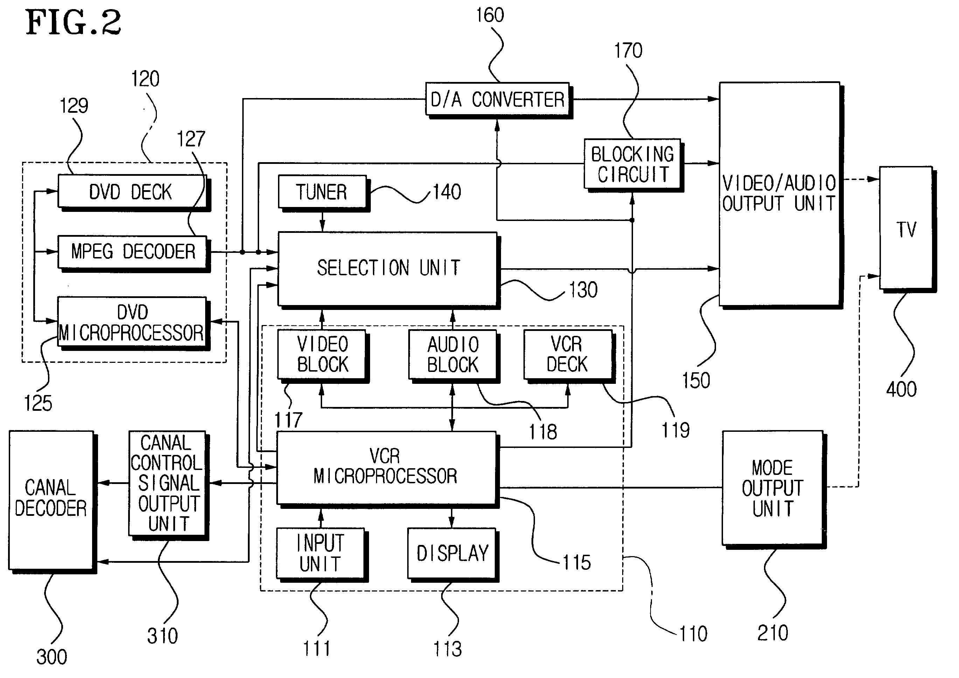

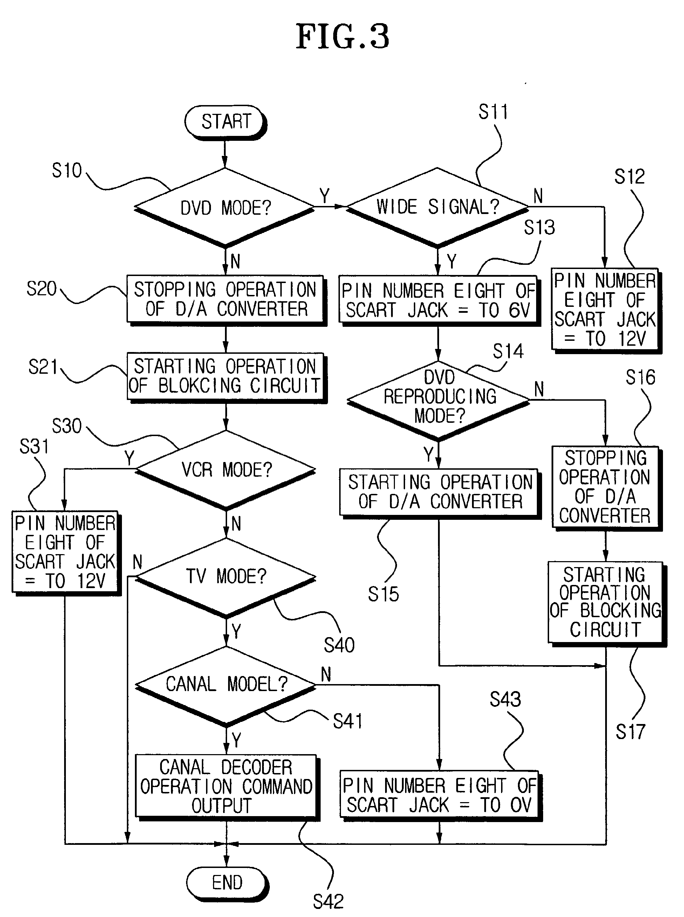

An embodiment of the present invention will now be described, by way of example, with reference to Figures 2 and 3 of the accompanying drawings, in which:
Figure 1 is a schematic diagram of a DVDP/VCR combination system;
Figure 2 is a block diagram of a combination system according to the present invention; and
Figure 3 is a flowchart illustrating a method of controlling the operation of a combination system according to the present invention.

Referring to Figure 2, a DVDP/VCR combination system comprises a DVDP unit 120 for reproducing data recorded on a DVD, and a VCR unit 110 for reproducing signals recorded on a magnetic tape and recording signals input from outside on magnetic tape.

The DVDP unit 120 has a DVD deck 129, an MPEG decoder 127 and a microprocessor 125. The DVD deck 129 reads data recorded on the DVDs. The MPEG decoder 127 receives the signal produced by the DVD deck 129 and decodes the signal into video data and audio data. The microprocessor 125 controls the operation of the MPEG decoder 127 and the DVD deck 129.

The VCR unit 110 has a VCR deck 119, a video block 117, an audio block 118 and a microprocessor 115. The VCR deck 119 records video and audio signals on magnetic tape and reproduces video and audio signals recorded on magnetic tape. The video block 117 and the audio block 118 respectively convert video signals and audio signals to be recorded by the VCR deck 119 into a format that can be recorded on the magnetic tape. Moreover, the video block 117 and the audio block 118 convert video signals and audio signals reproduced by the VCR deck 119 into a format suitable for supply to external devices. The VCR's microprocessor 115 controls the overall operations of the VCR deck 119, the video block 117 and the audio block 118.

An input unit 111 and a display 113 are connected to the VCR's microprocessor 115. The input unit 111 can be a control panel having a plurality of buttons and/or a receiving unit for receiving signals transmitted from a remote controller. The display 113 is composed of a conventional LCD and is installed so that is can be conveniently viewed by a user. The function of the display 113 is to display the operational state of the combination system to the user.

Generally, in the combination system having more than two independent apparatuses combined as one, respective microprocessors for controlling the operations of the apparatuses are installed in the apparatuses. However, one of the microprocessors plays a overall controlling role and control the operation of the other microprocessor(s). In the preferred embodiment of the present invention, the VCR microprocessor 115 is the main controlling part. Therefore, an operation command such as a mode set-up command input by the user through the input unit 111 is transmitted to the VCR microprocessor 115. The VCR microprocessor 115 directly controls each element 117, 118, 119 in the VCR unit 110 in response to the input operation command, or transmits a command for controlling each element 127, 129 of the DVD unit 120 to the DVDP's microprocessor 125.

In the combination system, there is a selection unit 130 for selecting between the outputs of the DVDP unit 120 and the VCR unit 110. The selection unit 130 can be composed of a MUX (multiplexer) IC, and the selection operation of the selection unit 130 is controlled by the VCR's microprocessor 115.

In addition, the combination system has a video/audio output unit 150 for outputting video and audio signals, output by the selection unit 130 and the MPEG decoder 127. The video/audio output unit 150 has a plurality of terminals (not shown). The terminals are comprised of a terminal for outputting RGB video signals from the DVDP unit 120, a terminal for outputting audio signals from the DVDP unit 120, a terminal for outputting composite video signals from the VCR unit 110 and a terminal for outputting audio signals from the VCR unit 110. The video/audio output unit 150 is connected with the external devices such as the TV 400 through these terminals. The TV 400 displays the video signal and outputs the audio signal transmitted from the video/audio output unit 150.

A blocking circuit 170 and a D/A converter 160 are provided between the MPEG decoder 127 and the video/audio output unit 150. The blocking circuit 170 is disposed in an output path of video data from the DVDP unit 120 and blocks the video data output from the MPEG decoder 127 to prevent it being transmitted to the video/audio output unit 150. The blocking circuit 170 can be simply composed of a switching circuit using a transistor. The D/A converter 160 convert audio data output from the MPEG decoder 127 into an analogue signal.

The operation of the D/A converter 160 and the blocking circuit 170 is controlled by the VCR's microprocessor 115. Accordingly, the D/A converter 160 outputs analogue audio signals or no signal in accordance with the control signal transmitted from the VCR's microprocessor 115 to the D/A converter 160. Moreover, the blocking circuit 170 selectively allows video data transmission to the video/audio output unit 150 in accordance with a control signal transmitted from the VCR's microprocessor 115 to the blocking circuit 170.

A mode output unit 210 for outputting control signals according to the operational state of the combination system to the TV 400 is disposed in the combination system. The mode output unit 210 outputs a signal informing of the current set-up mode of the combination system. The mode output unit 210 is connected with the TV 400 and thus the TV 400 is controlled by the control signal output from the mode output unit 210. As described above in the description of the prior art, in European-style TVs, the operating mode is changed according to the type of the currently received video signals. Therefore, the information about the type of the signal currently being transmitted should be input into European-style TVs. The mode output unit 210 has the function of outputting such information in response to the control of the VCR's microprocessor 115.

A SCART socket may be used by the mode output unit 210. For example, in Europe, pin number eight of the SCART socket is used as a terminal for transmitting the current operational mode to the TV 400. When pin number eight outputs 12 volts, the TV 400 recognises that the DVDP unit 120 is outputting a wide screen signal. When the pin number eight outputs 6 volts, the TV 400 recognises that the DVDP unit 120 or the VCR unit 110 is outputting outputs a conventional aspect ratio video signal. When pin number eight outputs zero volts, the TV 400 recognises that the VCR unit 110 is outputting a conventional broadcasting signal. Accordingly, the VCR's microprocessor 115 allows the mode output unit 210 to transmit an appropriate control signal to the TV 400 by controlling the VCR unit 110, the DVDP unit 120, and the selection unit 130 according to the current operational state, and at the same time by controlling the mode output unit 210 to correspond to the controlled state.

When the mode output unit 210 uses a SCART socket as above, another pin in the SCART socket is used as the video/audio output unit 150. For example, pin number 19 of the SCART socket is used for outputting the video signal to the TV 400 and pin number 20 is used for receiving the broadcasting signal from the TV 400. Accordingly, the mode output unit 210 and the video/audio output unit 150 are realised with one SCART socket.

A channel decoder 300 is connected with the combination system. The channel decoder 300 descrambles a received scrambled broadcast signal. The channel decoder 300 is connected with the selection unit 130. A tuner 140 is also connected with the selection unit 130. The tuner 140 provides the broadcast signal picked up by an antenna (not shown) to the selection unit 130. The selection unit 130 transmits the received broadcast signal to the channel decoder 300, and also receives the descrambled broadcast signal from the channel decoder 300.

A channel control signal output unit 310 is disposed between the channel decoder 300 and the VCR's microprocessor 115. The channel control signal output unit 310 transmits a control signal informing whether the currently received broadcasting signal is a signal having the scramble signal. The channel control signal output unit 310 is controlled by the VCR's microprocessor 115.

When the combination system is set up in TV mode, the VCR's microprocessor 115 controls the selection unit 130 to allow the received broadcast signal to be input into the channel decoder 300 and, at the same time, transmits a control signal (for example, a high signal) to start performance of the decoding operation by the channel decoder 300 to the channel control signal output unit 310. Accordingly, the channel decoder 300 is operated and the resulting descrambled broadcast signal is transmitted to the selection unit 130. The broadcast signal is output from the selection unit 130 and is transmitted to the TV 400 through the video/audio output unit 150. On the other hand, when there is no need to descramble the broadcast signal, the VCR's microprocessor 115 sends a control signal (for example, a low signal) to stop the decoding operation of the channel decoder 300 to the channel control signal output unit 310. Accordingly, the channel decoder 300 simply passes the broadcasting signal input from the selection unit 130 to its output and back to the selection unit 130.

The SCART socket can be used by the channel control signal output unit 310. For example, in Europe, pin number eight is used as the terminal for transmitting the control signal to the channel decoder 300. When pin number eight outputs a high signal, the channel decoder 300 recognises that a command for performing the decoding operation is input. When pin number eight outputs a low signal, the channel decoder 300 recognises that a command for passing the input broadcasting signal without performing the decoding operation is input. The VCR's microprocessor 115 controls the channel control signal output unit 310 to output an appropriate control signal in dependence on whether the broadcasting signal is scrambled or not, or an operation by the user.

When the channel control signal output unit 310 is composed by using the SCART socket, other pins in the SCART socket can be used as transmission terminals for inputting and outputting the broadcasting signal. In other words, although it is not shown in Figure 2, a connection terminal for receiving and transmitting the broadcasting signal should be disposed between the channel decoder 300 and the selection unit 130. Thus, pin number 19 in the SCART socket can be used as the terminal for transmitting the broadcasting signal from the selection unit 130 to the channel decoder 300 and pin number 20 can be used as the terminal for transmitting the broadcasting signal from the channel decoder 300 to the selection unit 130. Accordingly, the channel control signal output unit 310 and the terminal for transmitting the broadcasting signal are realised with a single SCART socket.

The control process of the combination system shown in Figure 2 will now be described by referring to Figure 3.

When the user inputs an operational mode selection command using the input unit 111, the input selection command is transmitted to the VCR's microprocessor 115. Consequently, the VCR's microprocessor 115 sets up the operational mode according to the selection command. The operational mode can be set up not only when the selection command is input but also when a certain function is input. For example, when the user inputs a command for reproduction by the DVDP unit 120, the operational mode is set up as a DVD mode. There are three operational modes: a DVD mode in which the DVDP unit 120 operates, a VCR mode in which the VCR unit 110 operates and a TV mode in which broadcast signals are received and transmitted to the TV 400.

The VCR's microprocessor 115 determines whether the currently set up operational mode is the DVD mode (S 10). If it is the DVD mode, the VCR's microprocessor 115 determines whether the signal reproduced by the DVDP unit 120 is a wide screen signal (S 11) and controls the mode output unit 210 to output the appropriate control signal (S 12, S 13). For example, when it is determined that the signal is a wide screen signal, the VCR's microprocessor 115 controls sets pin number eight of the SCART socket to 6 volts (S 13). When it is determined that the signal is not a wide screen signal, the VCR's microprocessor 115 sets pin number eight of the SCART socket to 12 volts (S 12). The TV 400 connected with the mode output unit 210 displays the image as a wide screen when the signal is the wide screen signal by changing the mode of the display operation in response to the output of the mode output unit 210.

Data informing whether the signal is a wide screen signal is recorded on the DVD, and the DVD's microprocessor 125 informs the VCR's microprocessor 115 of the detection of the wide screen data. Therefore, the VCR's microprocessor 125 knows whether the signal reproduced by the DVDP unit 120 is a wide screen signal.

When the command for reproduction by the DVDP unit 120 is input through the input unit 111 (S 14), the VCR's microprocessor 115 operates the D/A converter (S 15) and no control command is input into the blocking circuit 170. Accordingly, the video and audio data output from the MPEG decoder 127 are transmitted to the video/audio output unit 150 through the D/A converter 160 and the blocking circuit 170. Thus, the video and audio data reproduced by the DVDP unit 120 are transmitted to the TV 400. While the DVDP unit 120 is not reproducing, the VCR's microprocessor 115 stops the operation of the D/A converter 160 and inputs a command for blocking by the blocking circuit 170 (S 17). Accordingly, the video and audio data output from the MPEG decoder 127 is not transmitted to the video/audio output unit 150. While the DVDP unit 120 is not reproducing, the D/A converter 160 outputs no signals, thus the introduction of noise into the audio signal is prevented.

If it is determined that the current mode is not the DVD mode in step S 10, the VCR's microprocessor 115 stops the operation of the D/A converter 160, and starts the operation of the blocking circuit 170 (S 21). Therefore, the video and audio data output from the MPEG decoder 127 are not transmitted to the video/audio output unit 150. Thus, noise in the audio output and the output of the DVD image are prevented.

If the current operational mode is the VCR mode (S 30), the VCR's microprocessor 115 controls the mode output unit 210 to set pin number eight of the SCART socket to 12 volts (S 31). Therefore, the mode output unit 210 is in the same state as when the video signal, output in the DVD mode, is not a wide screen signal. In other words, the TV 400 recognises that a standard aspect ratio signal is being output in the DVD mode or the VCR mode. The TV 400 can recognise that the wide image signal is output only when the wide signal is output in the DVD mode.

If it is judged that the current mode is not the VCR mode in step S 30, the VCR's microprocessor 115 determines whether the current mode is the TV mode (S 40). If the current mode is determined to be the TV mode, the VCR's microprocessor 115 determines whether the combination system is a restricted access channel mode requiring connection with the channel decoder 300 (S 41). The fact that it is the restricted access channel mode can be set up in advance in the VCR's microprocessor 115. In addition, it can be determined whether the channel decoder 300 is connected with the combination system by installing a separate sensor.

When the system is in the restricted access channel mode, the VCR's microprocessor 115 controls the channel control signal output unit 310 to output a signal informing of the fact to the channel decoder 300 (S 42). At the same time, the VCR's microprocessor 115 controls the selection unit 130 to transmit the broadcast signal, received from the tuner 140, to the channel decoder 300. The channel decoder 300 descrambles the received signal and outputs the descrambled signal to the selection unit 130. Accordingly, the broadcast signal not having the view restriction function is provided to the TV 400 through the video/audio output unit 150.

When it is determined that the mode is not the restricted access channel mode or the channel decoder 300 is not installed in the step S 41, the VCR's microprocessor 115 controls the mode output unit 210 such that pin number eight of the SCART socket is set to zero volts (S 43). Accordingly, the TV 400 is converted to a broadcast signal reproducing mode by detecting that the broadcast signal is being input through the video/audio output unit 150.

According to the present invention, the combination system signals to the TV whether the signal output to the TV is a conventional aspect ration signal from the DVDP or the VCR, a wide screen signal reproduced by the DVDP or a broadcast signal. Thus, the TV can control its own operation accordingly.

Moreover, when a channel decoder is connected, the control signal of the channel decoder is output so that a descrambled broadcasting signal can be transmitted to the TV.

## Claims

1. A combination DVD player and VCR apparatus comprising:
a DVD deck (129);
a digital-to-analogue converter (160) for converting digital audio signals from the DVD deck into analogue audio signals;
a VCR deck (119); and
control means (115, 125) for controlling the operation of the apparatus; **characterised by**
a blocking circuit (170) for selectively blocking the output of digital video signals from the DVD deck (129); and
the control means (115, 125) being operable to control the blocking circuit (170) to block the video output of the DVD deck and to disable the digital-to-analogue converter (160) during output of video from the VCR deck (119).

2. An apparatus according to claim 1, including means (130, 140, 150) for receiving and outputting broadcast television signals, wherein the control means (115, 125) is operable to control the blocking circuit (170) to block the video output of the DVD deck and to disable the digital-to-analogue converter (160) during output of broadcast television signals.

3. An apparatus according to claim 2, including means (130) for providing received broadcast television signals to a descrambling means (300) and accepting descrambled broadcast television signals from the same descrambling means (300) for subsequent output.

4. A combination system having a DVDP for reproducing data recorded on a DVD and a VCR for reproducing data recorded on a magnetic tape, comprising:
an input unit for inputting a selection command of an operation mode from a user;
a mode output unit for outputting the operation mode to an outside; a D/A converter disposed in the DVDP in order to convert an audio data output from the DVDP into an analog signal;
a blocking circuit disposed on an output passage of a video data output from the DVDP to the outside in order to block an output of the video data; and
a control unit for controlling the mode output unit to output a fact whether the video signal reproduced by the DVDP is a wide signal when a DVD mode for operating the DVDP is selected through the input unit, and for controlling an operation of the D/A converter and the blocking circuit to stop the operation of the D/A converter and perform a blocking operation of the blocking circuit when another operation mode other than the DVD mode is selected through the input unit.

5. The combination system of claim 4, further comprising a canal control signal output unit connected with a canal decoder for removing a scramble signal for view restriction, the scramble signal being included in a broadcasting signal, the canal control signal output unit for transmitting an operation control signal to the canal decoder,
wherein the control unit controls the canal control signal output unit to output a signal for requesting a start of an operation of the canal decoder when the selection command for selecting a TV mode for outputting the broadcasting signal is input through the input unit.

6. The combination system of claim 5, wherein the control unit controls the D/A converter to be operated and the blocking circuit not to be operated when the DVD mode is selected and an operation command for reproducing of the DVDP is input through the input unit.
